# FASCICULE DE BREVET EUROPEEN

(11) **EP 0 283 460 B1**
(45) Date de publication et mention de la délivrance du brevet: **07.09.1994**
(21) Numéro de dépôt: 88870049.9
(22) Date de dépôt: 16.03.1988
(51) Int. Cl.: C08C 2/06, C08F 6/10

(54) **Procédé pour enlever le solvant d'une solution de polymère**
Verfahren zum Entfernen von Lösungsmittel aus einer Polymerlösung
"Process for removing the solvent from a solution of a polymer"

(30) Priorité: 16.03.1987 LU 86810
(43) Date de publication de la demande: 21.09.1988
(73) Titulaire: FINA RESEARCH S.A., B-7181 Seneffe (Feluy) (BE)
(72) Inventeur: Naveau, Jean Marie Marcelle Guillaume, B-1400 Nivelles (BE)
(74) Mandataire: Leyder, Francis

(56) Documents cités:
- FR-A- 2 107 282
- FR-A- 2 245 674

## Description

La présente invention se rapporte à un procédé pour enlever le solvant hors de solution de polymères. En particulier, la présente invention se rapporte à un procédé pour enlever le solvant hors d'une solution de polymères élastomériques ayant une teneur en polymères d'au moins 20 % en poids.

Généralement, le traitement de solutions de polymères pour en enlever le solvant et obtenir des granulés de polymère comprend deux appareils. Dans un premier appareil, on enlève une majorité du solvant, de manière à avoir une solution relativement visqueuse que l'on introduit dans un appareil de dégazage comprenant une ou deux vis sans fin, et plusieurs ouvertures disposées à la périphérie de la vis pour permettre l'échappement du solvant vaporisé.

La première étape peut se réaliser soit dans un réacteur, soit également dans une vis sans fin. Dans les deux cas, les problèmes qui se posent sont liés non seulement au contrôle du débit entre les systèmes utilisés dans les deux appareils, mais également au transfert de la solution de polymère entre les deux systèmes, en particulier lorsque l'on traite des solutions de polymère élastomérique fortement visqueuses.

Avec les systèmes en deux appareils, on observe également une mauvaise stabilité thermique du polymère formé, compte tenu des nombreuses zones mortes qui se créent entre les vis et du long temps de séjour du polymère dans les appareils.

De plus, lorsque l'on traite des solutions de polymères élastomériques de type caoutchouteux dans des appareillages classiques, à granulation sous eau, on observe une réticulation du caoutchouc à l'endroit de la filière. Celle-ci est due au moins en partie à la température élevée résultant du gradient de pression créé en amont de la filière avec ce type de granulation.

On demande également de traiter ces solutions de polymères élastomériques de manière à obtenir une teneur en composés volatils résiduels aussi basse que possible:
cependant, avec les procédés usuels en deux appareils, on est conduit à se limiter à des teneurs résiduelles d' environ 0,5 % en poids, compte tenu de la taille réduite de la vis utilisée dans la deuxième étape.

Il semble dès lors souhaitable de posséder un procédé pour enlever le solvant de solutions de polymères élastomériques à caractère caoutchouteux ou non en un seul appareil et ce,jusqu'à obtenir une teneur en composés volatils résiduels inférieure à 0,1 % en poids.

Lorsqu'il est utilisé dans la présente invention, le terme "polymère élastomérique" signifie un polymère dont au moins environ 15% en poids est constitué par une phase élastomère, le reste éventuel étant constitué par une phase thermoplastique.

La présente invention a pour objet un nouveau procédé en un appareil pour enlever le solvant de solution de polymères élastomériques contenant au moins 20 % de polymère élastomérique, et qui permette d'éviter les inconvénients mentionnés ci-dessus.

La présente invention a également pour objet un nouveau procédé en un appareil pour enlever le solvant de solutions de polymères élastomériques jusqu'à obtenir une teneur en composé volatil résiduel inférieure à 0,1% en poids.

La demande de brevet français n° 2245674 décrit un procédé pour éliminer les composants volatils d'une composition de polymère méthacrylate. Le procédé s'effectue dans un extrudeur à vis équipé de deux sections de dégazéification.

Le procédé de la présente invention pour enlever en un seul appareil le solvant d'une solution de polymère élastomérique contenant au moins 20% de polymère élastomérique est caractérisé en ce qu'il comprend les étapes suivantes:
- introduire dans la trémie d'alimentation d'une vis sans fin, la solution de polymère élastomérique préalablement chauffée à une température comprise entre 150 et 200°C, sous une pression contrôlée supérieure à la pression d'ébullition du solvant;
- créer une détente dans la zone d'alimentation;
- enlever, avec cette détente ainsi créée, par la zone de ventilation située en arrière de la trémie d'alimentation, 80 à 95 % du solvant, tout en faisant avancer la solution de polymère élastomérique;
- réchauffer la solution de polymère à une température de 150°C à 200°C;
- enlever, dans les zones de ventilation situées en avant de la trémie d'alimentation, le reste du solvant;
- injecter éventuellement entre les différentes zones de ventilation, une quantité d'eau comprise entre 0,5 et 2 % en poids de polymère, de manière à favoriser l'évacuation de solvant;
- introduire la pâte de polymère élastomérique, exempte de solvant, au travers d'une filière;
- couper le polymère dans le granulateur situé juste derrière la filière.

On réalise le procédé de l'invention en introduisant la solution de polymère élastomérique dans la trémie d'alimentation d'une vis sans fin.

Les polymères élastomériques que l'on traite dans la présente invention peuvent être à caractère caoutchouteux ou thermoplastique. A cet effet, on peut traiter des polymères de butadiène, d'isoprène ou de préférence des copolymères à caractère caoutchouteux constitués de monomères vinylaromatiques et de diènes conjugués comme par exemple des copolymères de styrène et de butadiène ou de styrène et d'isoprène, dans lesquels la proportion de monomère diène conjugué est d'au moins 15% en poids. Dans le cas où l'on applique le procédé de la présente invention à des polymères élastomériques à caractère thermoplastique, il s'agit le plus souvent de copolymères blocs de styrène et de diène conjugué, ayant une forte teneur en styrène. Il est entendu que le procédé de la présente invention s'applique également aux polymères élastomériques du type copolymère bloc vinylaromatique/diène conjugué dont la fraction diène conjugué est partiellement ou totalement hydrogénée.

Ces polymères sont obtenus par polymérisation en solution des monomères de départ correspondants. Les polymères ou copolymères se présentent sous forme d'une solution dans le solvant de polymérisation, le plus souvent des hydrocarbures paraffiniques, cycloparaffiniques, aromatiques. A titre d'exemple de solvants appropriés, on peut notamment citer le cyclohexane, le pentane, l'hexane, le cycopentane, l'isooctane, le benzène, le toluène, ou des mélanges d'hexane et de cyclohexane. La teneur en polymère dans la solution est généralement comprise entre 20 et 60 % en poids.

La Demanderesse a maintenant trouvé que l'on pouvait réaliser l'enlèvement du solvant jusqu'à obtenir une teneur résiduelle en solvant égale ou inférieure à 0,1 %, et ce en traitant la solution de polymère en un seul appareil.

En réalisant l'enlèvement du solvant de solutions de polymères selon le procédé de l'invention, on a trouvé de manière inattendue que la majeure partie du solvant pouvait être éliminée par une ventilation située en arrière de la trémie d'alimentation. L'enlèvement de la majeure partie du solvant de cette manière est une des caractéristiques importantes de la présente invention, dans la mesure où le polymère résultant doit avoir une teneur résiduelle très faible en matières volatiles. On a trouvé qu'environ 80 à 95% du solvant pouvait être enlevé de cette manière.

On a trouvé d'une manière inattendue, qu'en agissant de la sorte, non seulement la pâte de polymère continue d'avancer sans entrave avec la vis sans fin, mais le solvant est facilement éliminé puisqu'il n'y a aucune entrave à son passage vers l'arrière de la vis, alors que l'on s'attendait à ce que l'enlèvement de la majeure partie du solvant par l'arriére de la vis ferait que du polymère bloquerait la ventilation.

On réalise cette ventilation arrière en préchauffant les solutions à 150-200°C et en créant une détente dans la zone d'alimentation de la vis sans fin. On règle cette détente au moyen de la vanne de contrôle située sur la conduite d'alimentation de la vis sans fin.

Cette élimination du solvant a pour effet de réduire considérablement la température de la solution de polymère.

La Demanderesse a trouvé que, pour obtenir un bon rendement de l'enlèvement du solvant dans les zones ultérieures de ventilation, il fallait réchauffer à nouveau la solution de polymère à une température comprise entre 150°C et 200°C, l'apport en calories étant réalisé soit par le chauffage du fourreau de la vis à une température entre 180°C et 250°C, soit en prévoyant dans la vis des éléments introduisant des forces de cisaillement, ou encore en combinant les divers moyens.

On a constaté que si on ne réchauffe pas la solution de polymère à une température suffisante, on ne parvient pas à atteindre des niveaux de teneurs résiduelles de l'ordre de 0,1 %.

Au fur et à mesure de l'avancement de la pâte de polymère dans la vis, on élimine progressivement le solvant résiduel par les différentes zones de ventilation.

Ces zones sont généralement sous une pression inférieure ou égale à la pression atmosphérique. La pression absolue décroît au fur et à mesure de la progression de la solution de polymère dans la vis, et passe de la pression atmosphérique à environ 5 mbars en fin de vis. Ces zones de dégazage sont généralement au nombre de 3 à 5 en fonction de la quantité de solvant à éliminer.

Entre chacune des zones de dégazage, on peut prévoir des alimentations en eau pour favoriser l'élimination du solvant. Généralement, la quantité d'eau introduite dans la pâte de polymère est comprise entre 0,5 et 2 % en poids basé sur le polymère à chaque addition.

Comme il vient d'être spécifié ci-dessus, les zones de dégazage se trouvent à des pressions différentes, et afin d'éviter les phénomènes de succion, il est usuel d'introduire dans la vis des éléments d'étanchéité entre les zones de dégazage. Ceux-ci sont généralement constitués par des élements de vis à pas gauche, la vis étant pour le reste à pas droit. Ce type d'élément est également placé après les endroits d'introduction d'eau, car il permet également d'obtenir un mélange intime.

Pour assurer la granulation de polymères caoutchouteux ou collants, on utilise généralement des granulateurs sous eau dans le but d'éviter l'aggrégation des granulés. Cependant, dans les granulations sous eau utilisées habituellement, on a observé une réticulation avec ces polymères. Cette réticulation produit des gels de polymère insoluble qui diminuent la qualité du produit résultant et rendent le polymère inutilisable pour des applications ultérieures.

La Demanderesse a trouvé d'une manière inattendue que les granulés produits selon le procédé de l'invention ne collent pas ensemble si on les manipule correctement après la granulation (c'est-à-dire si on ne laisse pas les granulés chauds se toucher), ce qui évite la nécessité de la granulation sous eau.

Comme la granulation sous eau n'est pas une condition requise pour la présente invention, on peut éviter le problème de la réticulation.

La Demanderesse a trouvé qu'en utilisant un type de granulateur comme un granulateur excentrique permettant d'installer la filière juste en aval de la vis sans fin, on parvenait à réduire les zones mortes et à réduire la perte de charge, de telle sorte que la température du produit reste limitée en dessous de la température de réticulation du polymère. Il n'est pas non plus nécessaire de faire la découpe du polymère sous eau, ce qui représente un avantage certain du procédé de l'invention.

La Demanderesse a également trouvé qu'il fallait faire fonctionner les vis de taille industrielle à une vitesse de 50 à 300 RPM pour obtenir une bonne dévolatilisation. Généralement, cette vitesse est comprise entre 100 et 200 RPM.

Selon le procédé de l'invention, on parvient à enlever en un seul appareil de grandes quantités de solvant hors de solutions de polymères élastomériques, sans créer de problème de blocage ou de colmatage de la vis.

Il est entendu que la présente invention se rapporte en particulier au traitement de solutions de polymères élastomériques, mais qu'elle peut être appliquée à tout type de polymère se présentant sous forme d'une solution dans un solvant.

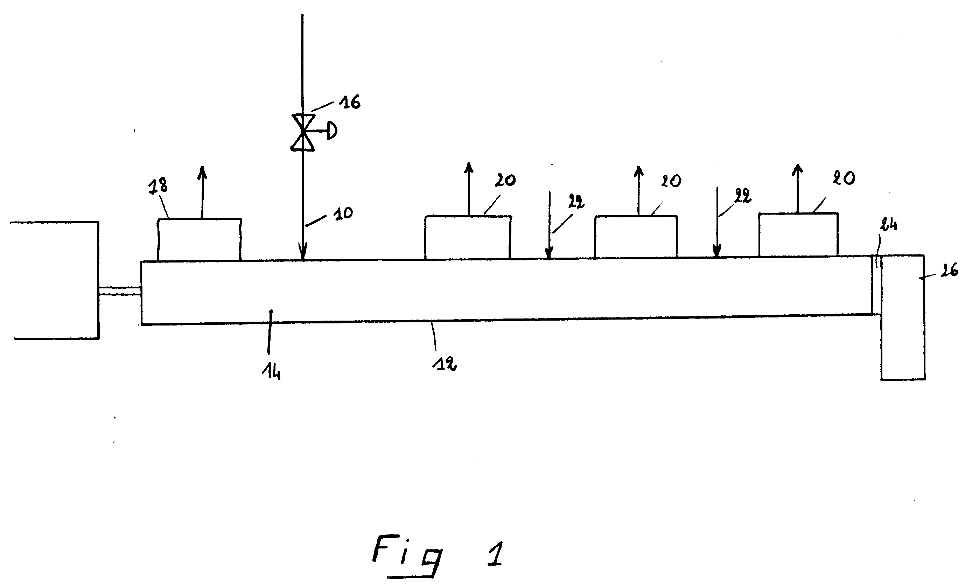

Le procédé de la présente invention est cependant décrit à l'aide de la figure annexée qui représente un mode d'exécution d'une extrudeuse pour enlever le solvant d'une solution de polymère contenant au moins 20% de polymère.

On introduit la solution de polymère dans la trémie d'alimentation (10) d'une extrudeuse (12) comportant une double vis sans fin (14).

On contrôle la pression dans l'extrudeuse ainsi que le débit d'alimentation au moyen de la vanne de contrôle (16).

L'extrudeuse comporte une zone de ventilation arrière (18) par laquelle on enlèvera la majorité du solvant. La pâte de polymère est entraînée vers l'avant au moyen des vis sans fin (14). Pour éliminer le reste du solvant, on a disposé plusieurs zones de ventilation (20) sur l'extrudeuse (12). Entre les zones de ventilation, on a également prévu des moyens (22) pour introduire un fluide, généralement de l'eau, pour favoriser l'élimination du solvant.

La pâte de polymère ainsi débarrassée de son solvant traverse la filière (24) et est découpée en granulés au moyen du granulateur (26).

Les exemples suivants sont donnés afin de mieux illustrer la présente invention, mais sans pour autant en limiter la portée.

### Exemple 1

Après avoir effectué la polymérisation en solution du butadiène et du styrène, on récupère une solution à 38 % dans le cyclohexane de copolymère radial styrène-butadiène contenant 40 % de styrène.

On introduit cette solution à une température de 170°C dans la trémie d'alimentation d'une extrudeuse double vis (construite avec des modules WERNER-PFLEIDERER (WP) type ZSK-57) à un débit de 75 kg/heure. On règle la pression au moyen de la vanne située sur la conduite d'alimentation. Cette extrudeuse comporte une zone de ventilation située à l'arrière de la trémie d'alimentation et trois zones situées en avant de cette trémie. On a disposé la filière et le granulateur juste en aval de la vis sans fin.

On a appliqué les conditions opératoires suivantes : Vide dans les zones de ventilation:

| | |
|---|---|
| - zone arrière | 800 mbar |
| 1ère zone avant | 800 mbar |
| 2ème zone avant | 80 mbar |
| 3ème zone avant | 10 mbar |
| vitesse de rotation: | 230 RPM |

On a effectué des injections d'eau avant les deux dernières zones de ventilation, à raison de 1 % d'eau basé sur le poids de polymère.

On a récupéré le solvant à raison de 92 % dans la zone arrière, 3 % dans les 1ème et 2ème zone avant, et 2 % dans la dernière zone. La teneur finale en matière volatile était de 0,1 % en poids.

La pression avant granulation était de 15 bars et la température de la matière avant granulation était de 195°C.

On a parfaitement granulé le polymère, sans devoir recourir à une découpe sous eau.

### Exemple 2

Après avoir effectué la polymérisation en solution du butadiène et du styrène, on récupère une solution à 38 % dans le cyclohexane de copolymère bloc styrène-butadiène contenant 75 % de styrène.

On introduit cette solution à une température de 165°C dans la trémie d'alimentation d'une extrudeuse double vis (type ZSK-57 WP) à un débit de 80 kg/heure. On règle la pression au moyen de la vanne située sur la conduite d'alimentation. Cette extrudeuse comporte une zone de ventilation située à l'arrière de la trémie d'alimentation et trois zones situées en avant de cette trémie. On a disposé la filière et le granulateur juste en aval de la vis sans fin.

On a appliqué les conditions opératoires suivantes : Vide dans les zones de ventilation:

| | |
|---|---|
| - zone arrière | 800 mbar |
| 1ère zone avant | 800 mbar |
| 2ème zone avant | 80 mbar |
| 3ème zone avant | 7 mbar |
| vitesse de rotation: | 270 RPM |

On a effectué des injections d'eau avant les deux dernières zones de ventilation, à raison de 1 % d'eau basé sur le poids de polymère.

On a récupéré le solvant à raison de 89 % dans la zone arrière, 3 % et 6 % dans les 1ème et 2ème zones avant, et 2 % dans la dernière zone. La teneur finale en matière volatile était de 0,1 % en poids.

La pression avant granulation était de 15 bars et la température de la matière avant granulation était de 192°C. On a parfaitement granulé le polymère, sans devoir recourir à une découpe sous eau.

### Exemple 3

Après avoir effectué la polymérisation en solution de l'isoprène et du styrène, on récupère une solution à 38 % dans le cyclohexane de copolymère bloc styrène-isoprène contenant 15 % de styrène.

On introduit cette solution à une température de 160°C dans la trémie d'alimentation d'une extrudeuse double vis (type ZSK-57 WP) à un débit de 50 kg/heure. On règle la pression au moyen de la vanne située sur la conduite d'alimentation. Cette extrudeuse comporte une zone de ventilation située à l'arrière de la trémie d'alimentation et trois zones situées en avant de cette trémie. On a disposé la filière et le granulateur juste en aval de la vis sans fin.

On a appliqué les conditions opératoires suivantes : Vide dans les zones de ventilation:

| | |
|---|---|
| - zone arrière | 800 mbar |
| 1ère zone avant | 600 mbar |
| 2ème zone avant | 60 mbar |
| 3ème zone avant | 9 mbar |
| vitesse de rotation: | 220 RPM |

On a effectué des injections d'eau avant les deux dernières zones de ventilation, à raison de 1 % d'eau basé sur le poids de polymère.

On a récupéré le solvant à raison de 89 % dans la zone arrière, 4 % et 6 % dans les 1ème et 2ème zone avant, et 1 % dans la dernière zone. La teneur finale en matière volatile était de 0,1 % en poids.

La pression avant granulation était de 8 bar et la température de la matière avant granulation était de 180 °C.

On a parfaitement granulé le polymère, sans devoir recourir à une découpe sous eau.

## Revendications

1. Procédé pour enlever en un seul appareil le solvant d'une solution de polymère élastomérique contenant au moins 20% de polymère élastomérique caractérisé en ce qu'il comprend les étapes suivantes:
- introduire dans la trémie d'alimentation d'une vis sans fin, la solution de polymère élastomérique préalablement chauffée à une température comprise entre 150 et 200°C, sous une pression contrôlée supérieure à la pression d'ébullition du solvant;
- créer une détente dans la zone d'alimentation;
- enlever, avec la détente ainsi créée, par la zone de ventilation située en arrière de la trémie d'alimentation, 80 à 95 % du solvant, tout en faisant avancer la solution de polymère élastomérique;
- réchauffer la solution de polymère à une température de 150°C à 200°C;
- enlever, dans les zones de ventilation situées en avant de la trémie d'alimentation, le reste du solvant;
- injecter éventuellement entre les différentes zones de ventilation, une quantité d'eau comprise entre 0,5 et 2 % en poids de polymère, de manière à favoriser l'évacuation de solvant;
- introduire la pâte de polymère élastomérique, exempte de solvant, au travers d'une filière;
- couper le polymère dans le granulateur situé juste derriére la filière.

2. Procédé selon la revendication 1, caractérisé en ce que l'on élimine le solvant de solutions de polymères élastomériques choisis parmi les homopolymères de butadiène, les homopolymères d'isoprène, et les copolymères constitués de monomères vinylaromatiques et diènes conjugués, dont la fraction diène conjugué peut être partiellement ou totalement hydrogénée.

3. Procédé selon l'une quelconque des revendications 1 et 2, caractérisé en ce que l'on élimine le solvant de solutions de copolymères constitués de monomères vinylaromatiques et diènes conjugués dans lesquels la proportion de monomères diènes conjugués est d'au moins 15% en poids.

4. Procédé selon l'une quelconque des revendications 1 à 3, caractérisé en ce que l'on élimine le solvant de solutions de copolymères blocs styrène-butadiène et/ou styrène-isoprène.

5. Procédé selon l'une quelconque des revendications 1 à 4, caractérisé en ce que la solution de polymère contient environ 40 % de polymère.

6. Procédé selon l'une quelconque des revendications 1 à 5, caractérisé en ce que l'on réchauffe la solution de polymère ayant perdu de 80 à 95 % de son solvant, en portant le fourreau de la vis à une température comprise entre 180°C et 250°C, et/ou en introduisant dans la vis des éléments créant des forces de cisaillement.

7. Procédé selon l'une quelconque des revendications 1 à 6, caractérisé en ce que l'on diminue la pression absolue dans la vis de la pression atmosphérique à 5 mbars au fur et à mesure de la progression de la solution de polymère dans la vis.

8. Procédé selon l'une quelconque des revendications 1 à 7, caractérisé en ce que la vis comprend de 3 à 5 zones de dégazage.

9. Procédé selon l'une quelconque des revendications 1 à 8, caractérisé en ce que l'on fait tourner la vis à une vitesse de rotation comprise entre 50 et 300 RPM, et de préférence entre 100 et 200 RPM.

## Claims

1. Process for removing, in a single stage, the solvent from a solution of elastomeric polymer containing at least 20% of elastomeric polymer, characterized in that it comprises the following stages:
- introducing into the hopper feeding an endless screw the solution of elastomeric polymer, heated beforehand to a temperature of between 150 and 200°C, under a controlled pressure higher than the boiling pressure of the solvent;
- creating a depressurization in the feed zone;
- removing 80 to 95% of the solvent with the depressurization thus created, via the ventilation zone situated to the rear of the feed hopper, while making the solution of elastomeric polymer move forward;
- reheating the polymer solution to a temperature of 150°C to 200° C;
- removing the remainder of the solvent in the ventilation zones situated forward of the feed hopper;
- injecting if appropriate between the various ventilation zones a quantity of water of between 0.5 and 2% by weight of polymer, so as to promote the removal of solvent;
- introducing the solvent-free elastomeric polymer dough through a die;
- cutting the polymer in the granulator situated immediately behind the die.

2. Process according to claim 1, characterized in that the solvent is removed from solutions of elastomeric polymers chosen from butadiene and isoprene homopolymers and vinylaromatic and conjugated diene copolymers in which the conjugated diene fraction can be partially or totally hydrogenated.

3. Process according to either of claims 1 and 2, characterized in that the solvent is removed from copolymers solutions consisting of vinylaromatic monomers and conjugated dienes, the solutions having a conjugated diene monomers content of at least 15% by weight.

4. Process according to either of claims 1 to 3, characterized in that the solvent is removed from solutions of styrene-butadiene and/or styrene-isoprene block copolymers.

5. Process according to either of claims 1 to 4, characterized in that the polymer solution contains about 40% of polymer.

6. Process according to either of claims 1 to 5, characterized in that the solution of polymer which has lost from 80 to 95% of its solvent is reheated by heating the screw barrel to a temperature of between 180°C and 250°C and/or by introducing into the screw components creating shearing forces.

7. Process according to any one of claims 1 to 6, characterized in that the absolute pressure in the screw is reduced from atmospheric pressure to 5 mbars in step with the progress of the polymer solution in the screw.

8. Process according to any one of claims 1 to 7, characterized in that the screw comprises from 3 to 5 degassing zones.

9. Process according to any one of claims 1 to 8, characterized in that the screw is made to rotate at a speed of rotation of between 50 and 300 RPM, and preferably between 100 and 200 RPM.

## Patentansprüche

1. Verfahren zum Entfernen des Lösungsmittels einer Lösung von elastomerem Polymer, die mindestens 20% elastomeres Polymer enthält, in einer einzigen Vorrichtung, dadurch gekennzeichnet, daß es die folgenden Stufen umfaßt:
- Einführen der vorher auf eine Temperatur zwischen 150 und 200°C erwärmten Lösung des elastomeren Polymers unter einem kontrollierten Druck oberhalb des Dampfdruckes des Lösungsmittels in einen Fülltrichter einer Förderschnekke;
- Erzeugen einer Druckverminderung in der Zufuhrzone;
- Entfernen von 80 bis 95% des Lösungsmittels mit der so erzeugten Druckverminderung durch die hinter dem Fülltrichter angeordnete Entlüftungszone, während die Lösung des elastomeren Polymers fortbewegt wird;
- Wiedererwärmen der Polymerlösung auf eine Temperatur von 150°C bis 200°C;
- Entfernen des Lösungsmittelrestes in den vor dem Fülltrichter angeordneten Entlüftungszonen;
- gegebenenfalls Einführen einer Wassermenge zwischen 0,5 und 2 Gew.-% des Polymers in einer die Evakuierung des Lösungsmittels begünstigenden Weise zwischen den verschiedenen Entlüftungszonen;
- Einführen der vom Lösungsmittel befreiten Paste des elastomeren Polymers in eine Düse;
- Schneiden des Polymers im unmittelbar hinter der Düse angeordneten Granulator.

2. Verfahren nach Anspruch 1, dadurch gekennzeichnet, daß man das Lösungsmittel aus Lösungen elastomerer Polymerer beseitigt, die ausgewählt sind aus den Homopolymeren von Butadien, den Homopolymeren von Isopren und den aus vinylaromatischen Monomeren und konjugierten Dienen gebildeten Copolymeren, deren Teil des konjugierten Diens teilweise oder völlig hydriert sein kann.

3. Verfahren nach einem der Ansprüche 1 und 2, dadurch gekennzeichnet, daß man das Lösungsmittel aus Lösungen von Copolymeren beseitigt, die aus vinylaromatischen Monomeren und konjugierten Dienen gebildet sind, bei denen der Anteil der Monomeren konjugierter Diene mindestens 15 Gew.-% beträgt.

4. Verfahren nach einem der Ansprüche 1 bis 3, dadurch gekennzeichnet, daß man das Lösungsmittel aus Lösungen von Styrol-Butadien- und/oder Styrol-Isopren-Blockcopolymeren entfernt.

5. Verfahren nach einem der Ansprüche 1 bis 4, dadurch gekennzeichnet, daß die Polymerlösung etwa 40% Polymer enthält.

6. Verfahren nach einem der Ansprüche 1 bis 5, dadurch gekennzeichnet, daß man die Polymerlösung, die 80 bis 95% ihres Lösungsmittels verloren hat, wieder erwärmt, indem man den Mantel der Schnecke auf eine Temperatur zwischen 180°C und 250°C bringt und/oder in die Schnecke Elemente einbringt, die Scherkräfte erzeugen.

7. Verfahren nach einem der Ansprüche 1 bis 6, dadurch gekennzeichnet, daß man den absoluten Druck in der Schnecke entsprechend dem Fortschreiten der Polymerlösung in der Schnecke von Atmosphärendruck auf 5 mbar vermindert.

8. Verfahren nach einem der Ansprüche 1 bis 7, dadurch gekennzeichnet, daß die Schnecke 3 bis 5 Entgasungszonen umfaßt.

9. Verfahren nach einem der Ansprüche 1 bis 8, dadurch gekennzeichnet, daß die Schnecke mit einer Rotationsgeschwindigkeit zwischen 50 und 300 U/min und vorzugsweise zwischen 100 und 200 U/min gedreht wird.
